# EUROPEAN PATENT APPLICATION

(11) **EP 4 664 538 A1**
(43) Date of publication of application: **17.12.2025**
(21) Application number: 24753235.1
(22) Date of filing: 01.02.2024
(51) Int. Cl.: H01M 4/13, H01M 4/62, H01M 4/134, H01M 4/139, H01M 10/052, H01M 10/0562

(54) **NEGATIVE ELECTRODE MIXTURE, SLURRY, NEGATIVE ELECTRODE, AND BATTERY**

(30) Priority: 10.02.2023 JP 2023019423
(71) Applicant: Mitsui Mining & Smelting Co., Ltd., Shinagawa-ku Tokyo 141-8584 (JP)
(72) Inventor: INOUE, Daisuke, Ageo-shi, Saitama 362-0021 (JP)
(74) Representative: Novagraaf Technologies
(86) International application number: PCT/JP2024/003366
(87) International publication number: WO 2024/166792

(57) **Abstract**

Disclosed is a negative electrode mixture constituting a negative electrode layer, the negative electrode mixture containing: particles of a solid electrolyte; and particles of an electroconductive material which are disposed on a surface of the particles of the solid electrolyte. Preferably, the solid electrolyte includes a crystal phase having an argyrodite-type crystal structure. Preferably, the electroconductive material is a carbon material or a metal material. Also preferable is a slurry containing: the negative electrode mixture; a binder; and a solvent, wherein the slurry has a viscosity of from 0.05 to 3 Pa·s at 25°C and at a shear rate of 10 (1/s).

## Description

### Technical Field

The present invention relates to a negative electrode mixture, a slurry, a negative electrode, and a battery.

### Background Art

Secondary batteries have been gaining attention in recent years as part of efforts to prevent global warming by reducing CO₂ emission. Among such batteries, lithium-ion batteries have a high energy density and can easily be reduced in size and weight, and are thus widely used as power sources for mobile electronic devices such as laptop computers and mobile phones. Recent developments have also been made in high-power, high-capacity lithium-ion batteries for use in electric and hybrid vehicles.

However, using lithium metal foil in a lithium-ion battery may lead to a drawback that battery performance may deteriorate due to poor contact between the solid electrolyte layer and the negative electrode, or due to the formation of an oxide film on the surface of the lithium metal foil. A lithium-free battery employing an in-situ plating-type negative electrode has been proposed, which uses LiCoO₂ as the positive electrode material and Lipon as the solid electrolyte and deposits lithium metal onto the charge collector without using lithium metal foil. However, the achievable battery capacity is around 0.1 mAh in terms of discharge current, which is insufficient.

To address this, Patent Literature 1 proposes increasing the discharge current by disposing a negative electrode, which includes a solid electrolyte layer containing solid electrolyte particles and having a voidage of 0.05 to 0.8, in opposition to a positive electrode, with the solid electrolyte layer interposed therebetween, thereby enabling good contact between the solid electrolyte layer and the negative electrode, even when lithium metal is deposited during charging.

### Citation List

### Patent Literature

Patent Literature 1: JP 2012-146553A

### Summary of Invention

However, in a battery having the negative electrode disclosed in Patent Literature 1, lithium (Li) crystals are deposited in a dendritic manner, leading to frequent short-circuiting and poor product yield.

An objective of the present invention is to provide a negative electrode mixture capable of producing a negative electrode which inhibits short-circuiting in a battery, particularly in a lithium-ion battery.

The present Inventor has conducted in-depth studies to suppress short-circuiting in lithium-ion batteries, and has found that dendritic growth of lithium (Li) crystals can be inhibited by deliberately forming a negative electrode layer containing particles of a solid electrolyte and causing lithium (Li) crystals to be deposited within voids between the solid electrolyte particles, unlike conventional in-situ plating-type negative electrodes. Incidentally, in cases where an electroconductive material is to be included in the negative electrode layer, the electroconductive material is typically added to a solvent and made into a slurry. The Inventor has found that an increase in slurry viscosity may pose difficulty in uniformly dispersing the solid electrolyte particles, which makes it difficult to form the voids uniformly and to deposit lithium (Li) crystals within the voids. However, adding a large amount of solvent to the slurry to adjust the slurry viscosity may impair the productivity of the negative electrode.

The present invention provides a negative electrode mixture constituting a negative electrode layer,
the negative electrode mixture comprising:
particles of a solid electrolyte; and
particles of an electroconductive material which are disposed on a surface of the particles of the solid electrolyte.

The present invention also provides a slurry comprising:
a negative electrode mixture;
a binder; and
a solvent, wherein
the negative electrode mixture comprises
   particles of a solid electrolyte, and
   particles of an electroconductive material which are disposed on a surface of the particles of the solid electrolyte, and
the slurry has a viscosity of from 0.05 to 3 Pa·s at 25°C and at a shear rate of 10 (1/s).

The present invention also provides a negative electrode comprising:
a negative electrode charge collector; and
a negative electrode layer that is disposed on the negative electrode charge collector and contains a negative electrode mixture, wherein
   the negative electrode mixture comprises
particles of a solid electrolyte, and
particles of an electroconductive material which are disposed on a surface of the particles of the solid electrolyte

The present invention also provides battery comprising:
a negative electrode;
a positive electrode; and
a solid electrolyte layer disposed between the negative electrode and the positive electrode, wherein

the negative electrode comprises
   a negative electrode charge collector, and
   a negative electrode layer that is disposed on the negative electrode charge collector and contains a negative electrode mixture, and
the negative electrode mixture comprises
   particles of a solid electrolyte, and
   particles of an electroconductive material which are disposed on a surface of the particles of the solid electrolyte.

### Description of Embodiments

The present invention will be described below according to preferred embodiments thereof. A negative electrode mixture of the present invention contains particles of a solid electrolyte and particles of an electroconductive material.

In the negative electrode mixture of the present invention, the particles of the electroconductive material are disposed on the surface of the particles of the solid electrolyte. In the present technical field, typically, an electroconductive material is blended to improve the electron conductivity of the negative electrode mixture, and by extension, the negative electrode layer. This has conventionally tended to increase the concentration of a slurry of a negative electrode mixture containing solid electrolyte particles and electroconductive material particles. In contrast, in the present invention, the surface of the solid electrolyte particles is covered by electroconductive material particles, preferably by a dry process described below, and the electroconductive material particles are disposed on the surface of the solid electrolyte particles. Thus, it is possible to reduce the viscosity of the slurry containing the negative electrode mixture. As a result, when forming a negative electrode layer by using the slurry, the solid electrolyte particles can be dispersed uniformly within the negative electrode layer. Thus, lithium (Li) crystals can be deposited successfully in the voids between the solid electrolyte particles, which can inhibit dendritic crystal deposition and inhibit battery short-circuiting.

It is preferable that the solid electrolyte particles and the electroconductive material particles are composited. It is preferable that the expression "the solid electrolyte particles and the electroconductive material particles are 'composited'" means that the electroconductive material particles are dispersed inseparably in tight adhesion with the solid electrolyte particles on the surface or interior of the solid electrolyte particles. Examples of a "composited" state may include a state in which the electroconductive material particles are inseparably dispersed on the surface and/or in the interior of the solid electrolyte particles, and a state in which the solid electrolyte particles and the electroconductive material particles have bonded through a chemical reaction.

The expression "the electroconductive material particles are inseparably dispersed on the surface and/or in the interior of the solid electrolyte particles" means that, for example, when the composite material obtained by the present production method is observed with an energy-dispersive X-ray spectrometer-equipped scanning electron microscope (SEM-EDS) and the constituent elements of the solid electrolyte (e.g., sulfur element) and the constituent elements of the electroconductive material are mapped, the constituent elements of the solid electrolyte and the constituent elements of the electroconductive material are present in an overlapping state. Alternatively, this may mean that, when a cross-section of a negative electrode layer in a negative electrode produced by using the negative electrode mixture of the present invention is observed, the constituent elements of the solid electrolyte and the constituent elements of the electroconductive material are present in an overlapping state. Note that, the fact that "the solid electrolyte and the electroconductive material have composited through a chemical reaction" can be verified, for example, through the presence/absence of C-S bonds by Raman spectroscopy or photoelectron spectroscopy, in cases where the electroconductive material is a carbon material.

In a state where the electroconductive material particles are disposed on the surface of the solid electrolyte particles, it is preferable that the ratio of the contact area of the electroconductive material particles to the surface of the solid electrolyte particles is, for example, 10% or greater, more preferably 20% or greater, even more preferably 30% or greater, further more preferably 50% or greater, and it is even more preferable that the electroconductive material particles are in contact so as to cover the entire surface of the solid electrolyte particles, i.e., the aforementioned ratio is preferably 80% or greater or more preferably 90% or greater.

The ratio of the contact area of the electroconductive material particles to the surface of the solid electrolyte particles can be measured according to the following method. For example, a cross-section sample of the particles is prepared with a Cross Section Polisher (CP), and an SEM image of the cross-section is acquired. Using image analysis software (MAC-View), the contact length of the electroconductive material which is in contact with a single solid electrolyte particle is measured, and the ratio can be found from the contact length and the perimeter of the single solid electrolyte particle. The SEM image is acquired at 5000× magnification in a single field of view, and five solid electrolyte particles are selected randomly therefrom, to find the average.

The thickness of the electroconductive material is not particularly limited, as long as it is a thickness sufficient to fulfill its functions as an electroconductive material, and may be, for example, 0.01 µm or greater, or 0.05 µm or greater, or 0.1 µm or greater. The upper limit of the thickness of the electroconductive material is determined based on the blending amount of the electroconductive material to be included in the negative electrode mixture, and by extension, the negative electrode, and may be, for example, preferably 0.5 µm or less, more preferably 0.2 µm or less.

The thickness of the electroconductive material can be measured according to the following method. For example, a cross-section sample of the particles is prepared with a Cross Section Polisher (CP), and from an SEM image of the cross-section, the thickness of the electroconductive material on a single solid electrolyte particle is measured. The SEM image is acquired at 10000× magnification in a single field of view, and five solid electrolyte particles are selected randomly therefrom, to find the average.

As for methods for compositing the solid electrolyte particles and the electroconductive material particles to dispose the electroconductive material particles on the surface of the solid electrolyte particles, it is preferable to employ, for example, a dry process. More specifically, it is preferable to apply compression/impact force to the solid electrolyte particles and the electroconductive material particles in a mixed state, or apply shearing/friction force thereto. This compositing can inhibit an increase in viscosity of the slurry when forming a negative electrode with the negative electrode mixture, thereby enabling the solid electrolyte particles to be uniformly dispersed within the slurry and thus optimizing the size of the voids between the solid electrolyte particles.

It is preferable to composite the solid electrolyte particles and the electroconductive material particles, which are in a mixed state, by applying mechanical energy such as compression/impact force or shearing/friction force. In this compositing, it is preferable to employ a device which is used mainly to subject powder to stirring, mixing, kneading, granulation, grinding, dispersion, surface modification, etc. For example, it is possible to use a planetary ball mill, a ball mill, a jet mill, a bead mill, an agitation pulverizer, a vibratory mill, a hammer mill, a roller mill, an atomizer, etc. The type of mechanical energy that can primarily be applied by using such devices differs depending on each device, and for example, in cases of using a planetary ball mill, primarily, compression/impact force can be applied to the solid electrolyte particles and the electroconductive material particles in a mixed state, to composite these materials. The centrifugal acceleration obtained during device rotation is not particularly limited, so long as the solid electrolyte particles and the electroconductive material particles can be composited, and may be, for example, preferably 10 G or greater, more preferably 15 G or greater, even more preferably 18 G or greater. Further, the centrifugal acceleration may be, for example, preferably 40 G or less, more preferably 30 G or less, even more preferably 25 G or less. When the centrifugal acceleration is within the aforementioned range, short-circuiting of lithium is less likely to occur in a battery including a negative electrode produced using the negative electrode mixture of the present invention.

In a state where the solid electrolyte particles and the electroconductive material particles have been composited by the aforementioned method, it is preferable that, in the negative electrode mixture of the present invention, the content of the electroconductive material is, for example, preferably 1 part by mass or greater, more preferably 2 parts by mass or greater, even more preferably 5 parts by mass or greater, with respect to 100 parts by mass of the solid electrolyte. On the other hand, it is preferable that the content of the electroconductive material is, for example, preferably 50 parts by mass or less, more preferably 20 parts by mass or less, even more preferably 15 parts by mass or less, further more preferably 10 parts by mass or less, with respect to 100 parts by mass of the solid electrolyte.

By mixing the solid electrolyte particles and the electroconductive material particles within the aforementioned range, the solid electrolyte acquires electron conductivity. In this way, lithium (Li) crystals can grow within the space between the solid electrolyte particles, and dendritic growth thereof can be inhibited. This relationship between the electron conductivity of the solid electrolyte and the inhibition of dendritic growth of lithium (Li) crystals is a novel finding by the Inventor of the present invention.

It is preferable that the negative electrode mixture of the present invention does not contain a negative electrode active material. It is also preferable that the negative electrode, which is produced from the negative electrode mixture of the present invention, does not contain a negative electrode active material. The negative electrode produced from the negative electrode mixture of the present invention does not contain a negative electrode active material upon initial charging, but after being initially charged, lithium metal can be deposited during charging, and thus, the negative electrode functions as an in-situ plating-type negative electrode containing a negative electrode active material (lithium).

It is preferable that the solid electrolyte particles contained in the negative electrode mixture of the present invention have a specific particle size distribution. More specifically, when D₁₀, D₅₀, and D₉₀ are respectively defined as a cumulative volume particle diameter of the solid electrolyte particles at a cumulative volume of 10 vol%, 50 vol%, and 90 vol% as measured according to a laser diffraction/scattering particle size distribution measurement method, it is preferable that the value of (D₉₀-D₁₀)/D₅₀ of the solid electrolyte is, for example, less than 10.0, preferably less than 4.0, more preferably less than 3.8, even more preferably less than 2.2. (D₉₀-D₁₀)/D₅₀ is an index of sharpness of the particle size distribution of the particles, and the closer the value is to 0, the more uniform the particle size distribution of the particles is. When the particle size distribution is uniform, the voids formed between the solid electrolyte particles will become uniform in the negative electrode layer containing the solid electrolyte particles. As a result, lithium (Li) ions having moved from the positive electrode during charging can be deposited successfully within the voids as lithium metal. Thus, in contrast to conventional in-situ plating-type negative electrodes, the negative electrode produced by using the negative electrode mixture of the present invention can inhibit dendritic growth of lithium (Li) crystals, and can thus inhibit short-circuiting in a battery including the negative electrode. The lower limit of the value of (D₉₀-D₁₀)/D₅₀ is not particularly limited, and may be, for example, greater than 0, or 0.5 or greater, or 0.8 or greater.

Measurement of the particle size distribution of the solid electrolyte particles by a laser diffraction/scattering particle size distribution measurement method can be performed, for example, according to the following procedure. An automatic sample delivery device ("Microtorac SDC" from Nikkiso Co., Ltd.) for a laser diffraction particle diameter distribution measurement device is used to supply 6 ml of a sample (slurry) to a nonaqueous solvent (toluene), and at a flow rate of 50%, ultrasonic waves at 30 W are applied for 60 seconds. Then, the particle size distribution is measured using, for example, a laser diffraction particle size distribution measurement device "MT3000II" from Nikkiso Co., Ltd., and the values of the respective cumulative volume particle diameters D₁₀, D₅₀, and D₉₀ at 10 vol%, 50 vol%, and 90 vol% can be measured from the obtained volume-based particle-size distribution chart.

At the time of measuring the particle size distribution, the nonaqueous solvent is used through a 60-µm filter. Measurement is performed twice according to the conditions set as follows: solvent refractive index: 1.50; particle transparency condition: transparent; particle refractive index: 1.59; shape: non-spherical; measurement range: 0.133 to 704.0 µm; measurement time: 10 seconds. The average value of the two measurements is found respectively as D₁₀, D₅₀, and D₉₀.

The sample (slurry) can be prepared by manually mixing 0.3 g of the solid electrolyte and 5.7 g of dispersion liquid (mass ratio of toluene to SN dispersant 9228 (from San Nopco) is 19:1).

In the present invention, in addition to the solid electrolyte having a specific particle size distribution, it is preferable that the cumulative volume particle diameter D₉₅ at a cumulative volume of 95 vol% as measured according to the laser diffraction/scattering particle size distribution measurement method is, for example, preferably less than 65 µm, more preferably 30 µm or less, even more preferably 10 µm or less. When the solid electrolyte has the aforementioned particle size distribution and also contains a minimal number of large particles, in the negative electrode layer including the solid electrolyte particles, the size of voids between the solid electrolyte particles can be optimized. As a result, lithium (Li) ions, which have moved from the positive electrode during charging, can be efficiently deposited as lithium metal within the voids, thereby inhibiting dendritic growth of lithium metal. Thus, it is possible to prevent short-circuiting in batteries including the negative electrode produced from the negative electrode mixture of the present invention.

From the viewpoint of facilitating formation of appropriately-sized voids between the solid electrolyte particles, D₅₀ of the solid electrolyte particles is, for example, preferably 0.1 µm or greater, more preferably 0.3 µm or greater, even more preferably 0.5 µm or greater. Further, D₅₀ of the solid electrolyte particles is, for example, preferably 15 µm or less, more preferably 10 µm or less, even more preferably 5 µm or less.

It is preferable that the BET specific surface area of the solid electrolyte is, for example, preferably 2 m²/g or greater, more preferably 3 m²/g or greater, even more preferably 4 m²/g or greater. On the other hand, the BET specific surface area of the solid electrolyte is, for example, preferably 30 m²/g or less, more preferably 20 m²/g or less, even more preferably 16 m²/g or less, further more preferably 10 m²/g or less. When the BET specific surface area of the solid electrolyte is within the aforementioned range, lithium (Li) ions, which have moved from the positive electrode side during charging, can be deposited more efficiently within the voids between the solid electrolyte particles, thereby inhibiting dendritic growth of lithium metal. Thus, it is possible to prevent short-circuiting in batteries including the negative electrode produced using the negative electrode mixture of the present invention.

The BET specific surface area is calculated according to the following method. Absorption-desorption isotherms are measured according to the constant volume gas adsorption method using a specific surface area measurement device "BELSORP- mini II" from MicrotracBEL Corp., and the BET specific surface area is calculated by multipoint measurement. Nitrogen is used for the gas.

To adjust the value of (D₉₀-D₁₀)/D₅₀ and the particle diameters of the solid electrolyte, the solid electrolyte may be subjected to, for example, a suitable grinding treatment. More specifically, a solid electrolyte produced according to a known method may be coarsely ground with a ball mill etc., and then subjected to wet fine grinding, to adjust the particle size distribution and particle diameters. More specifically, solid electrolyte particles having the target particle size distribution and particle diameters can be obtained by controlling the grinding conditions for performing wet fine grinding, such as the grinding time, the rotation speed of the grinding device, the grinding media material, the particle size of the grinding media, the slurry concentration, the slurry feed amount, the mass ratio between the solid electrolyte and the grinding media, etc. Determination of such grinding conditions falls within the scope of common technical knowledge of a skilled person and can be determined without undue burden to the skilled person.

From the viewpoint of inhibiting the growth of dendritic lithium metal to an extent that short-circuiting can be inhibited, it is preferable that the solid electrolyte contained in the negative electrode mixture of the present invention includes, for example, a lithium (Li) element, a sulfur (S) element, and an M element. Examples of the M element may preferably be at least one selected from phosphorus (P) element, germanium (Ge) element, antimony (Sb) element, silicon (Si) element, tin (Sn) element, aluminum (Al) element, titanium (Ti) element, iron (Fe) element, nickel (Ni) element, cobalt (Co) element, and manganese (Mn) element. Particularly, it is preferable that the M element includes at least a phosphorus (P) element, and more preferably, the M element consists only of a P element.

Examples of compounds including a Li element, a S element, and an M element may include Li₇PS₆, Li₇₊₃ₓ(P⁵⁺₁₋ₓFe²⁺ₓ)S₆, Li₇₊ₓ(P⁵⁺₁₋ₓSi⁴⁺ₓ)S₆, etc., which are compounds consisting only of Li, S, and M elements (in the formulas, x represents a number from 0.1 to 1.0). As compounds including Li, S, and M elements, it is also possible to use compounds that include other elements in addition to the above three elements. Examples of such other elements may include halogen (X) elements. By using a compound including an X element in addition to Li, S, and M elements, it is possible to further improve the characteristics, as an active material, of the composite material obtained by the present production method. As for the X element, it is possible to use at least one element selected from fluorine (F), chlorine (Cl), bromine (Br), and iodine (I).

It is preferable that the compound including Li, S, M, and X elements is expressed by compositional formula (1), LiₐMS_{b}X_{c} (in the formula, M represents at least one element selected from P, Ge, Sb, Si, Sn, Al, Ti, Fe, Ni, Co, and Mn; and X represents at least one element selected from F, Cl, Br, and I), in terms that the growth of dendritic lithium metal can be inhibited to an extent that short-circuiting can be inhibited.

From the viewpoint of improving lithium-ion conductivity, it is preferable that, in the compositional formula (1), a is preferably 3.0 or greater, more preferably 3.5 or greater. On the other hand, a is preferably 9.0 or less, more preferably 8.0 or less. Particularly, in cases where the M element is a P element, the ratio of the number of atoms of Li element to P element, i.e., the value of a, is for example preferably 5.0 or greater, more preferably 5.5 or greater, even more preferably 6.0 or greater. On the other hand, a is, for example, preferably 8.0 or less, more preferably 7.8 or less, even more preferably 7.5 or less.

Further, b is preferably 4.0 or greater, more preferably 4.5 or greater, even more preferably 5.0 or greater. On the other hand, b is preferably 7.5 or less, more preferably 7.0 or less, even more preferably 6.5 or less.

Further, c is preferably 0.1 or greater, more preferably 0.2 or greater. On the other hand, c is preferably less than 2.0, more preferably less than 1.0, even more preferably 0.8 or less, further more preferably 0.6 or less.

Particularly, it is preferable that the M element in the aforementioned compositional formula (1) includes at least one selected from a P element, Ge element, Sb element, Sn element, and Si element, and more preferably includes a P element, and more preferably consists only of a P element. In this way, the growth of dendritic lithium metal can be inhibited to an extent that short-circuiting can be inhibited.

In cases where the M element is a P element, it is preferable that the value of c, which is the ratio of the number of atoms of X element to P element, is for example preferably 0.1 or greater, more preferably 0.2 or greater. On the other hand, the value of c is, for example, preferably less than 2.0, more preferably less than 1.0, even more preferably 0.8 or less, further preferably 0.6 or less. In cases where the M element is a P element, the ratio of the number of atoms of Li element to P element is, for example, preferably 5.0 or greater, more preferably 5.5 or greater, even more preferably 6.0 or greater. On the other hand, the ratio of the number of atoms of Li element to P element is, for example, preferably 9.0 or less, more preferably 8.0 or less, even more preferably 7.5 or less. Note that, in cases where the M element includes a P element and an element other than P, the ratio of the number of atoms of Li element to P element may be, for example, 20.0 or less, or 15.0 or less, or 9.0 or less.

It is preferable that the solid electrolyte is represented particularly by compositional formula (2), Li_{7-d}MS_{6-d}X_{d}, because the growth of dendritic lithium metal can be inhibited to an extent that short-circuiting can be inhibited. In cases where the M element is a P element, the value of d, which is the ratio of the number of atoms of X to P element, may be the same as the value of c described in the aforementioned compositional formula (1), so description thereof is omitted. Further, in cases where the M element is a P element, the ratio of the number of atoms of Li element to P element may be the same as that in the aforementioned compositional formula (1), so description thereof is omitted.

In cases where the M element in the aforementioned compositional formula (1) includes M1 and M2 elements which are different from each other, the composition of the solid electrolyte can be represented by Liₐ(M1_{1-y}M2_{y})S_{b}X_{c}. Further, in cases where the M element in the aforementioned compositional formula (2) includes M1 and M2 elements which are different from each other, the composition of the solid electrolyte can be represented by Li_{7-d}(M1_{1-y}M2_{y})S_{6-d}X_{d}. Herein, y is preferably 0.010 or greater, more preferably 0.020 or greater, even more preferably 0.050 or greater. On the other hand, y is preferably 0.70 or less, more preferably 0.40 or less, even more preferably 0.20 or less. Note that the M1 and M2 elements may be the same as the M elements described in the compositional formula (1), so description thereof is omitted.

The composition of the elements in the solid electrolyte can be measured, for example, by ICP optical emission spectrometry.

In addition to including the elements described above, it is preferable that the solid electrolyte includes a crystal phase having an argyrodite-type crystal structure. In this way, lithium-ion conductivity can be further increased. Particularly, it is preferable that the solid electrolyte includes a crystal phase having a cubic or orthorhombic argyrodite-type crystal structure. Whether a crystal phase having an argyrodite-type crystal structure is included or not can be determined by analyzing the solid electrolyte by X-ray diffractometry or X-ray total scattering. For the radiation source in X-ray diffractometry, it is possible to use Cu Kα radiation, such as Cu Kα1 radiation.

In cases where the solid electrolyte has a cubic argyrodite-type crystal structure, it is preferable that there are peaks at positions of 2θ = 25.19° ± 1.00° and 29.62° ± 1.00° in an X-ray diffraction pattern measured using Cu Kα1 radiation.

In cases where the solid electrolyte has a cubic argyrodite-type crystal structure, it is preferable that, in addition to the positions of 2θ = 25.19° ± 1.00° and 29.62° ± 1.00°, there are peaks at one or two or more positions selected from 20 = 15.34° ± 1.00°, 17.74° ± 1.00°, 30.97° ± 1.00°, 44.37° ± 1.00°, 47.22° ± 1.00°, and 51.70° ± 1.00°, in an X-ray diffraction pattern measured using Cu Kα1 radiation, and more preferably at all of the positions of 2θ = 15.34° ± 1.00°, 17.74° ± 1.00°, 30.97° ± 1.00°, 44.37° ± 1.00°, 47.22° ± 1.00°, and 51.70° ± 1.00°, in addition to the positions of 2θ = 25.19° ± 1.00° and 29.62° ± 1.00°.

Further, in cases where the solid electrolyte has an orthorhombic argyrodite-type crystal structure, it is preferable that there are two peaks at the position of 2θ = 25.38° ± 1.00° and four peaks at 29.77° ± 1.00° in an X-ray diffraction pattern measured using Cu Kα1 radiation.

Further, in cases where the solid electrolyte has an orthorhombic argyrodite-type crystal structure, it is preferable that, in addition to the two peaks at the position of 2θ = 25.38° ± 1.00° and the four peaks at 29.77° ± 1.00°, there are peaks at one or two or more positions selected from 2θ = 15.40° ± 1.00° (two peaks), 17.86° ± 1.00° (two peaks), 31.25° ± 1.00° (two peaks), 44.40° ± 1.00° (four peaks), 47.20° ± 1.00° (four peaks), and 52.00° ± 1.00° (two peaks), in an X-ray diffraction pattern measured using Cu Kα1 radiation, and more preferably at all of the positions of 2θ = 15.40° ± 1.00° (two peaks), 17.86° ± 1.00° (two peaks), 31.25° ± 1.00° (two peaks), 44.40° ± 1.00° (four peaks), 47.20° ± 1.00° (four peaks), and 52.00° ± 1.00° (two peaks), in addition to the two peaks at the position of 2θ = 25.38° ± 1.00° and the four peaks at 29.77° ± 1.00°.

Note that, although the positions of the aforementioned peaks are described as the median value ± 1.00°, it may preferably be the median value ± 0.800°, more preferably the median value ± 0.500°.

The solid electrolyte may contain other materials or other components as necessary. Therefore, the solid electrolyte may consist of a single phase constituted by a crystal phase having an argyrodite-type crystal structure, or may include other phases in addition to the phase having an argyrodite-type crystal structure. For example, in addition to a crystal phase having an argyrodite-type crystal structure, the solid electrolyte may include a Li₂S phase, Li₃PS₄ phase, Li₄P₂S₆ phase, LiCl phase, LiBr phase, etc. Particularly, it is preferable that the solid electrolyte includes a Li₂S phase in addition to a crystal phase having an argyrodite-type crystal structure, because lithium-ion conductivity is further increased. Note, however, that it is preferable that the solid electrolyte includes, as a main material, a compound including Li, S, M, and X elements and including a crystal phase having an argyrodite-type crystal structure. Further, aside from the aforementioned other materials and other components, the solid electrolyte may include inevitable impurities in an amount that has minimal adverse influence on the effects of the present invention, such as less than 5 mass%, and more preferably around less than 3 mass%.

As for the electroconductive material contained in the negative electrode mixture of the present invention, examples may include various metal materials and electroconductive non-metal materials. Either one of a metal material or an electroconductive non-metal material may be used, or both may be used in combination.

Examples of the metal materials may include various precious metal elements, such as gold (Au) element, silver (Ag) element, platinum (Pt) element, palladium (Pd) element, rhodium (Rh) element, iridium (Ir) element, ruthenium (Ru) element, and osmium (Os) element. Other examples may include various transition metal elements, such as copper (Cu) element, iron (Fe) element, and tin (Sn) element. One of the aforementioned metal element may be used singly, or two or more metal elements may be used in combination.

As for the electroconductive non-metal materials, for example, carbon materials may be used. Examples thereof may include graphite, acetylene black, carbon black, carbon nanofibers, carbon nanotubes, nanographene, and fullerene nanowhiskers. One of the aforementioned carbon material may be used singly, or two or more carbon materials may be used in combination. Among these carbon materials, using carbon black can further improve the initial capacity and discharge rate characteristics of the battery. From the viewpoint of further enhancing this advantage, it is preferable to use acetylene black or furnace black as carbon black, and among the above, it is preferable to use oil furnace black, and more preferably Ketjen black.

The electroconductive material preferably has a particulate form, and its particle diameter D1 may be, for example, preferably 1 nm or greater, more preferably 10 nm or greater, even more preferably 20 nm or greater. Further, D1 may be, for example, preferably 600 nm or less, more preferably 500 nm or less, even more preferably 300 nm or less, further more preferably 200 nm or less. The particle diameter D1 of the electroconductive material may be the average particle size (the average value of at least 100 particles) of the Feret diameter as measured by directly observing the particles with a scanning electron microscope (SEM) or a transmission electron microscope (TEM).

It is preferable that the particle diameter D1 of the electroconductive material is smaller than the particle diameter (D₅₀) of the solid electrolyte particles.

It should be noted that in cases where, for example, the electroconductive material has a fibrous shape, like the aforementioned carbon nanotubes and carbon nanofibers, fiber diameter may be employed instead of particle diameter. The fiber diameter D2 may be, for example, preferably 50 nm or greater, more preferably 100 nm or greater, even more preferably 150 nm or greater. Further, D2 may be, for example, preferably 10000 nm or less, more preferably 5000 nm or less, even more preferably 2000 nm or less.

The negative electrode mixture of the present invention can be used to prepare a slurry for producing a negative electrode layer. The slurry contains the negative electrode mixture, a binder, and a solvent. As described above, the negative electrode mixture contains solid electrolyte particles, and electroconductive material particles which are disposed on the surface of the solid electrolyte particles.

In the slurry, the concentration of the total amount of the solid electrolyte and the electroconductive material within the slurry is, for example, preferably 20 mass% or greater, more preferably 30 mass% or greater, even more preferably 40 mass% or greater. On the other hand, the concentration is, for example, preferably 70 mass% or less, more preferably 65 mass% or less, even more preferably 60 mass% or less. When the concentration of the total amount of the solid electrolyte and the electroconductive material in the slurry is within the aforementioned range, the slurry viscosity can be adjusted to be within a desired range, and as a result, a negative electrode layer can be produced efficiently.

It is preferable that the slurry has a viscosity at 25°C of, for example, preferably 0.05 Pa·s or higher, more preferably 0.08 Pa·s or higher, even more preferably 0.1 Pa·s or higher, at a shear rate of 10 (1/s).

On the other hand, it is preferable that the slurry has a viscosity at 25°C of, for example, preferably 4 Pa·s or lower, more preferably 3 Pa·s or lower, even more preferably 2 Pa·s or lower, further more preferably 1 Pa·s or lower, at a shear rate of 10 (1/s).

Further, it is preferable that the slurry has a viscosity of 0.05 Pa·s or higher, more preferably 0.1 Pa·s or higher, at 25°C and at a shear rate of 100 (1/s). Further, it is preferable that the viscosity is 4.0 Pa·s or lower, more preferably 2.0 Pa·s or lower, even more preferably 1.2 Pa·s or lower, further more preferably 0.8 Pa·s or lower, at 25°C and at a shear rate of 100 (1/s).

Since the slurry has the aforementioned viscosity, when forming a negative electrode layer by using the slurry, the solid electrolyte particles can be dispersed uniformly within the negative electrode layer. Thus, lithium (Li) crystals can be deposited successfully in the voids between the solid electrolyte particles, which can inhibit dendritic crystal deposition and inhibit battery short-circuiting.

The viscosity of the slurry is measured, for example, with a rheometer.

Examples of the solvent may include, although not limited to, water, chloroform, alcohols such as methanol, ethanol, 1-propanol, 2-propanol, butanol, ethylene glycol, propylene glycol, glycerin, etc., and dimethyl sulfoxide (DMSO).

Examples of the binder may include resin materials, such as styrene butadiene rubber (SBR), polytetrafluoroethylene, polyvinylidene fluoride, polyethylene, etc.

A negative electrode can be produced by applying the slurry onto a negative electrode charge collector and drying the slurry. The negative electrode includes: a negative electrode charge collector; and a negative electrode layer that is disposed on the negative electrode charge collector and contains the negative electrode mixture. As described above, the negative electrode mixture contains solid electrolyte particles, and electroconductive material particles which are disposed on the surface of the solid electrolyte particles.

The negative electrode charge collector can be constituted by a material having excellent electric conductivity, with examples including metals, such as stainless steel, gold, platinum, zinc, nickel, tin, aluminum, molybdenum, niobium, tantalum, tungsten, titanium, etc., and alloys thereof. The thickness of the negative electrode charge collector may be, for example, preferably 1 µm or greater, more preferably 3 µm or greater, even more preferably 5 µm or greater.

On the other hand, the thickness of the negative electrode charge collector may be, for example, 50 µm or less, preferably 30 µm or less, or 15 µm or less.

The negative electrode can be produced, for example, by such methods as: dropping the slurry onto a negative electrode charge collector, and then scraping the same with a doctor blade etc.; bringing the slurry into contact with a negative electrode charge collector, and then cutting the same with an air knife; or forming a coating film through screen printing etc., and then removing the solvent through heating/drying.

A battery including a negative electrode produced from the negative electrode mixture of the present invention may have a structure including, for example, a positive electrode, the aforementioned negative electrode, and a solid electrolyte layer disposed between the positive electrode and the negative electrode, i.e., may be a solid-state battery. More specifically, the negative electrode can be used in a solid-state lithium battery. The solid-state lithium battery may be a primary battery or a secondary battery, but it is preferable to use the negative electrode in a lithium secondary battery. "Solid-state battery" may encompass solid-state batteries that do not include any liquid-state substance or gel-state substance as an electrolyte, and may also encompass structures that contain, for example, 50 mass% or less, or 30 mass% or less, or 10 mass% or less, of a liquid-state substance or gel-state substance as an electrolyte. In this case, the negative electrode produced by using the negative electrode mixture of the present invention does not contain a negative electrode active material in a state before use, i.e., in a state before being charged/discharged. That is, the negative electrode produced by using the negative electrode mixture of the present invention functions as a so-called in-situ plating-type negative electrode, which does not contain a negative electrode active material at the time of initial charging but contains a negative electrode active material (lithium) after being initially charged.

In relation to the foregoing embodiments, the present invention further discloses the following negative electrode mixtures, slurries, negative electrodes, and batteries.
{1} A negative electrode mixture constituting a negative electrode layer,
   the negative electrode mixture comprising:
   particles of a solid electrolyte; and
   particles of an electroconductive material which are disposed on a surface of the particles of the solid electrolyte.
{2} The negative electrode mixture as set forth in clause {1}, wherein a ratio of contact area of the particles of the electroconductive material to the surface of the particles of the solid electrolyte is 10% or greater.
{3} The negative electrode mixture as set forth in clause {1} or {2}, wherein the solid electrolyte contains a lithium (Li) element, a sulfur (S) element, and an M element (M is at least one selected from phosphorus (P), germanium (Ge), antimony (Sb), silicon (Si), tin (Sn), aluminum (Al), titanium (Ti), iron (Fe), nickel (Ni), cobalt (Co), and manganese (Mn)).
{4} The negative electrode mixture as set forth in any one of clauses {1} to {3}, wherein the solid electrolyte includes a crystal phase having an argyrodite-type crystal structure.
{5} The negative electrode mixture as set forth in any one of clauses {1} to {4}, wherein the electroconductive material is a carbon material or a metal material.
{6} A slurry comprising:
   a negative electrode mixture;
   a binder; and
   a solvent, wherein

   the negative electrode mixture comprises
      particles of a solid electrolyte, and
      particles of an electroconductive material which are disposed on a surface
      of the particles of the solid electrolyte, and
   the slurry has a viscosity of from 0.05 to 3 Pa·s at 25°C and at a shear rate of 10 (1/s).
{7} The slurry as set forth in clause {6}, wherein the slurry has a viscosity of from 0.1 to 4.0 Pa·s at 25°C and at a shear rate of 100 (1/s).
{8} A negative electrode comprising:
   a negative electrode charge collector; and
   a negative electrode layer that is disposed on the negative electrode charge
   collector and contains a negative electrode mixture, wherein
   the negative electrode mixture comprises
   particles of a solid electrolyte, and
   particles of an electroconductive material which are disposed on a surface of the particles of the solid electrolyte.
{9} The negative electrode as set forth in clause {8}, wherein lithium metal is depositable during charging.
{10} A battery comprising:
   a negative electrode;
   a positive electrode; and
   a solid electrolyte layer disposed between the negative electrode and the positive electrode, wherein

   the negative electrode comprises
      a negative electrode charge collector, and
      a negative electrode layer that is disposed on the negative electrode charge collector and contains a negative electrode mixture, and
   the negative electrode mixture comprises
      particles of a solid electrolyte, and
      particles of an electroconductive material which are disposed on a surface of the particles of the solid electrolyte.

### EXAMPLES

Hereinafter, the present invention will be described in greater detail using Examples. However, the scope of the present invention is not limited to the Examples below. Unless particularly stated otherwise, "%" means "mass%".

### {Example 1}

Li₂S powder, P₂S₅ powder, and LiCl (Li_{5.8}PS_{4.5}Cl_{1.2}) powder were used and were each measured such that the total amount was 75 g. Using a planetary ball mill (P-7 from Fritsch), the powders were automatically mixed and ground at a rotation speed of 600 rpm for 40 hours, to obtain a solid electrolyte having a composition of Li_{5.8}PS_{4.4}Br_{0.8}Cl_{0.8}. Then, the sample was pulverized in a mortar, and further ground with a ball mill. Thereafter, the sample was subjected to particle sizing using a sieve with a mesh opening of 53 µm, to obtain solid electrolyte particles having a particle diameter D₅₀ of 3.1 µm and a (D₉₀-D₁₀)/D₅₀ value of 1.8.

For the electroconductive material, acetylene black was used. The electroconductive material had a particle diameter D1 of 0.4 µm.

Using 95% of the solid electrolyte and 5% of the electroconductive material, these materials were composited with a Nobilta (NOB-MINI from Hosokawa Micron Corporation). The operation conditions for the planetary ball mill were as follows: rotation speed: 4000 rpm; time: 90 minutes.

The powder obtained by this compositing was pulverized in a mortar and subjected to particle sizing using a sieve with a mesh opening of 53 µm, to obtain solid electrolyte particles composited with the electroconductive material particles. The particle diameter D₅₀ of the solid electrolyte particles was 2.9 µm.

Next, the solid electrolyte particles composited with the electroconductive material particles, a binder, and a solvent were mixed, to prepare a slurry. The concentration, in the slurry, of the solid electrolyte particles composited with the electroconductive material particles was 40%. The concentration of the binder was 0.4%, and the concentration of the solvent was 60%. The viscosity of each slurry was as shown in Table 1 below.

The slurry viscosity was measured according to the following conditions.
- Device: RST rheometer
- Model: RSTCPSPAHSIN
- Manufacturer: AMETEK Brookfield
- Measurement performed at 25°C, at a shear rate within the range from 0.05 to 1000 (1/s)

The slurry was coated onto a stainless steel-made negative electrode charge collector by a doctor blade method to a thickness of 100 µm and was then dried, to produce a negative electrode.

All of the above operations were performed in a glovebox purged with sufficiently dried Ar gas (dew point: -60°C or lower).

### {Example 2}

A negative electrode was produced in the same manner as in Example 1, except that the slurry was prepared by compositing the solid electrolyte and the electroconductive material at a mass ratio of 90:10. The slurry viscosity was as shown in Table 1.

### {Example 3}

A negative electrode was produced in the same manner as in Example 1, except that the particle diameters D₁₀, D₅₀, and D₉₀ of the solid electrolyte particles were 0.4 µm, 0.7 µm, and 1.3 µm, respectively. The slurry viscosity was as shown in Table 1.

### {Example 4}

A negative electrode was produced in the same manner as in Example 1, except that carbon nanotubes (VGCF (registered trademark) from Resonac Corporation) were used for the electroconductive material. The slurry viscosity was as shown in Table 1.

### {Comparative Example 1}

A negative electrode was produced in the same manner as in Example 1, except that the compositing in Example 1 was not performed. The slurry viscosity was as shown in Table 1.

### {Evaluation}

Negative electrodes obtained in the respective Examples and Comparative Example were used to produce solid-state batteries according to the following procedure.

Each negative electrode was punched into a size of 25×25 mm. The punched-out negative electrode, a 25×25 mm solid electrolyte layer, and a 20×20 mm positive electrode were layered, and a pressure of 700 MPa was applied thereto by cold isostatic pressing (CIP), to produce a solid-state battery. For the solid electrolyte layer, the solid electrolyte in the respective Examples was used. For the positive electrode, an electrode made by forming a positive electrode layer containing NCM622 (LiNi_{0.6}Co_{0.2}Mn_{0.2}O₂) on an aluminum charge collector was used.

The obtained solid-state battery was subjected to charging/discharging under conditions wherein constant current-constant potential charging was performed at 25°C to 4.3 V at 0.1 C, and constant current discharging was performed to 2.5 V at 0.1 C, to check whether battery short-circuiting occurred or not. The termination current during charging was 0.05 C. The results are shown in Table 1.

**[Table 1]**

| | | | Example 1 | Example 2 | Example 3 | Example 4 | Comparative Example 1 |
|---|---|---|---|---|---|---|---|
| | Type | | Acetylene black | Acetylene black | Acetylene black | VGCF | Acetylene black |
| Electroconductive material | Ratio of contact area of electroconductive material particles to surface of solid electrolyte particles (%) | | 17 | 30 | 12 | 11 | 0 |
| | Added amount (%) | | 5 | 10 | 5 | 5 | 15 |
| Solid electrolyte | Particle diameter (µm) | D₁₀ | 1.1 | 1.1 | 0.4 | 1.1 | 1.1 |
| | | D₅₀ | 3.1 | 3.1 | 0.7 | 3.1 | 3.1 |
| | | D₉₀ | 6.8 | 6.8 | 1.3 | 6.8 | 6.8 |
| | | D₉₅ | 8.3 | 8.3 | 1.7 | 8.3 | 8.3 |
| | (D₉₀-D₁₀)/D₅₀ | | 1.8 | 1.8 | 1.4 | 1.8 | 1.8 |
| | BET specific surface area (m²/g) | | 5.7 | 5.7 | 13.5 | 5.7 | 5.7 |
| | Added amount (%) | | 95 | 90 | 90 | 95 | 85 |
| Slurry viscosity (Pa·s, @25°C, 10 (1/s)) | | | 3.6 | 0.3 | 2 | 0.2 | 7.6 |
| Slurry viscosity (Pa·s, @25°C, 100 (1/s)) | | | 0.5 | 0.1 | 0.4 | 0.1 | 3.9 |
| Battery short-circuiting | | | Absent | Absent | Absent | Absent | Present |

The results of Table 1 clearly show that, in the batteries produced by using the respective negative electrodes obtained in each Example and each made from the negative electrode mixture in which the electroconductive material particles are disposed on the surface of the solid electrolyte particles, short-circuiting did not occur during the aforementioned charging/discharging. In contrast, in the battery produced by using the negative electrode of Comparative Example 1, short-circuiting occurred in the first charging/discharging.

### Industrial Applicability

The present invention can provide a negative electrode mixture that can suitably be used to produce a negative electrode which inhibits short-circuiting in a battery, particularly in a lithium-ion battery.

## Claims

1. A negative electrode mixture constituting a negative electrode layer,
the negative electrode mixture comprising:
particles of a solid electrolyte; and
particles of an electroconductive material which are disposed on a surface of the particles of the solid electrolyte.

2. The negative electrode mixture according to claim 1, wherein a ratio of contact area of the particles of the electroconductive material to the surface of the particles of the solid electrolyte is 10% or greater.

3. The negative electrode mixture according to claim 1, wherein the solid electrolyte contains a lithium (Li) element, a sulfur (S) element, and an M element (M is at least one selected from phosphorus (P), germanium (Ge), antimony (Sb), silicon (Si), tin (Sn), aluminum (Al), titanium (Ti), iron (Fe), nickel (Ni), cobalt (Co), and manganese (Mn)).

4. The negative electrode mixture according to claim 3, wherein the solid electrolyte includes a crystal phase having an argyrodite-type crystal structure.

5. The negative electrode mixture according to any one of claims 1 to 4, wherein the electroconductive material is a carbon material or a metal material.

6. A slurry comprising:
a negative electrode mixture;
a binder; and
a solvent, wherein
the negative electrode mixture comprises
particles of a solid electrolyte, and
particles of an electroconductive material which are disposed on a surface of the particles of the solid electrolyte, and
the slurry has a viscosity of from 0.05 to 3 Pa·s at 25°C and at a shear rate of 10 (1/s).

7. The slurry according to claim 6, wherein the slurry has a viscosity of from 0.1 to 4.0 Pa·s at 25°C and at a shear rate of 100 (1/s).

8. A negative electrode comprising:
a negative electrode charge collector; and
a negative electrode layer that is disposed on the negative electrode charge
collector and contains a negative electrode mixture, wherein
the negative electrode mixture comprises
particles of a solid electrolyte, and
particles of an electroconductive material which are disposed on a surface of the particles of the solid electrolyte.

9. The negative electrode according to claim 8, wherein lithium metal is depositable during charging.

10. A battery comprising:
a negative electrode;
a positive electrode; and
a solid electrolyte layer disposed between the negative electrode and the positive electrode, wherein
the negative electrode comprises
a negative electrode charge collector, and
a negative electrode layer that is disposed on the negative electrode charge
collector and contains a negative electrode mixture, and
the negative electrode mixture comprises
particles of a solid electrolyte, and
particles of an electroconductive material which are disposed on a surface of the particles of the solid electrolyte.
